# EUROPÄISCHE PATENTSCHRIFT

(11) **EP 1 063 443 B1**
(45) Veröffentlichungstag und Bekanntmachung des Hinweises auf die Patenterteilung: **01.02.2006**
(21) Anmeldenummer: 00112919.6
(22) Anmeldetag: 20.06.2000
(51) Int. Cl.: F16D 69/00

(54) **Verfahren und Vorrichtung zum Herstellen eines Bremsbelags**
Process and device for manufacturing a brake lining
Procédé et dispositif pour la production d'une garniture de frein

(30) Priorität: 24.06.1999 DE 19928858
(43) Veröffentlichungstag der Anmeldung: 27.12.2000
(73) Patentinhaber: TMD Friction Services GmbH, 51381 Leverkusen (DE)
(72) Erfinder: Wriedt, Bernd, 48249 Dülmen (DE); Kemper, Hans-Jörg, 45721 Haltern (DE)
(74) Vertreter: Hosbach, Hans Ulrich

(56) Entgegenhaltungen:
- EP-A- 0 443 093
- FR-A- 2 748 790
- US-A- 4 835 013

## Beschreibung

Die Erfindung betrifft ein Verfahren sowie eine Vorrichtung zum Herstellen eines Bremsbelags, wobei Reibmaterial auf eine Trägerplatte aufdosiert und druckabhängig auf die Trägerplatte aufgepreßt wird und wobei die Trägerplatte mit dem aufgepreßten Reibmaterial einer Wärmebehandlung zum Aushärten des Reibmaterial unterworfen wird.

Ein derartiges Verfahren ist aus der WO 97/19277 bekannt. Beim Aufdosieren des Reibmaterials wird dessen Menge im Übermaß an die gewünschte Dicke des Reibbelages angepaßt. Anschließend erfolgt noch in der Dosierpresse das Aufpressen des Reibmaterials. Dies geschieht druckabhängig. Dabei wird ein vorgegebener Druck eingestellt, um das Reibmaterial soweit zu verfestigen, daß es der direkt anschließenden Wärmebehandlung in einem Härteofen standzuhalten vermag. Im Anschluß an den Härteofen werden die Bremsbeläge geschliffen. Dabei wird das Übermaß an Reibmaterial abgearbeitet. An den Schleifvorgang schließt sich eine Scorch-Behandlung an, mit der die Oberfläche des Reibbelages einsatzbereit gemacht wird. Da die Scorch-Behandlung die Dicke des Reibbelages beeinflußt, wird das Endmaß der die Scorch-Presse verlassenden Bremsbeläge erfaßt und zu einer entsprechenden Rückmeldung an die Schleifvorrichtung verarbeitet.

Aus EP-A-0443093 ist ein Verfahren bekannt, bei dem die mit der Belagmasse beschichtete Trägerplatte zunächst einer mehrstufigen, durckabhängigen Vorverdichtung unterworfen wird. Daran schließt sich ein wegabhängiger Preßvorgang an. Sodann wird der Bremsbelag wärmebehandelt, um die Belagmasse auszuhärten. Schließlich wird die Reibseite abgeschliffen. Eine ähnliche Verfahrensführung mit aus US-A-4835013 bekannt.

Der Erfindung liegt die Aufgabe zugrunde, die Bremsbelagherstellung zu vereinfachen und wirtschaftlicher zu gestalten.

Diese Aufgabe wird erfindungsgemäß durch ein Verfahren mit den Merkmalen des Anspruchs 1 bzw. eine Vorrichtung mit den Merkmalen des Anspruchs 6 gelöst. Insbesondere wird der wegabhängige Preßvorgang in den Vorgang des Aushärtens integriert.

Der wegeabhängige Preßvorgang, bei dem das Reibmaterial auf ein vorgegebenes Abmaß verdichtet wird, gleicht diejenigen Dickenunterschiede des Reibmaterials aus, die sich aufgrund von Dichte-Unterschieden des zudosierten Reibmaterials durch den druckabhängigen Preßvorgang ergeben. Die Trägerplatten mit dem aufgepreßten Reibmaterial gelangen also maßgenau in den nachgeschalteten Härteofen.

Nach Verlassen des Härteofens kann auf ein maßgenaues Schleifen, wie es bisher erforderlich war, verzichtet werden. Hierin liegt ein wesentlicher Vorteil der Erfindung. Der Schleifvorgang mußte nämlich sehr genau gesteuert werden und bedurfte daher eines entsprechenden Aufwandes. Auch mußten erhebliche Dickenunterschiede egalisiert werden. Teilweise war ein Materialabbau von größenordnungsmäßig 1 mm erforderlich. Der Schleifvorgang dauerte also entsprechend lange, und es ergab sich ein hoher Staubanfall, ganz abgesehen von den unvermeidbaren Materialverlusten. Nicht immer war es möglich, den Schleifstaub zu recyclieren. Häufig mußte er als Abfall deponiert werden. Außerdem war der Schleifvorgang energetisch und vorrichtungstechnisch aufwendig.

Ganz besonders ungünstige Verhältnisse ergaben sich dann, wenn das ausgehärtete Reibmaterial durch Schleifen angeschrägt werden mußte. Mit dem Verfahren nach der Erfindung hingegen ist es möglich, die Anschrägungen im Zuge des wegabhängigen Preßvorgangs mit der erforderlichen Genauigkeit zu erzeugen.

Die Erfindung schließt nicht aus, daß im Anschluß an den Härteofen ein Schleifvorgang durchgeführt wird, jedoch dient dieser nicht zur maßgenauen Einstellung der Reibbelagdicke und ggf. -form, sondern zum Entfernen der dünnschichtigen Preßhaut, deren Dicke deutlich innerhalb der Abmaßtoleranzen liegt.

Als Reibmaterial wird vorzugsweise ein solches verwendet, welches möglichst wenig zur Separation neigt, siehe z.B. die DE 196 40 175 A1. Dadurch vermindern sich die Dichteunterschiede beim Dosieren und folglich die Abmaßunterschiede durch den druckabhängigen Preßvorgang. Auch ist es vorteilhaft, das Reibmaterial mit hoher Genauigkeit zu dosieren.

Das Reibmaterial besteht zu einem wesentlichen Anteil aus Phenolharzen, die im Zuge des Herstellungsverfahrens aushärten (Novolake-Resitole-Resite). Der Aushärtungsvorgang bedingt den Eintrag von Energie. Dies geschieht durch Druck- und Temperatureinwirkungen, deren Zeitdauer entsprechend eingestellt wird. Erfindungsgemäß wird die Trägerplatte mit dem Reibmaterial während der Wärmebehandlung dem wegabhängigen Preßvorgang unterworfen. Der Energieeintrag während der Wärmebehandlung wird also vergrößert. Dementsprechend kann an anderer Stelle gespart werden.

Letzteres geschieht vorzugsweise im Zusammenhang mit dem druckabhängigen Preßvorgang. Dieser kann auf eine Minimalzeit eingestellt werden, und zwar zum einen - wie erläutert - aus energetischen Gründen und zum anderen aufgrund der Tatsache, daß die Weiterbehandlung, nämlich die wegabhängige Druckeinwirkung, nur eine relativ geringe Verfestigung des Reibmaterials voraussetzt. Der druckabhängige Preßvorgang muß also lediglich eine Einstellung der gewünschten Dichte bei geringer Festigkeit gewährleisten.

Eine Zeitersparnis an der Dosierpresse ist deshalb von besonderer Bedeutung, weil die Produktionslinie "hungernd" gefahren wird. Darunter ist zu verstehen, daß die jeweils nachgeschalteten Aggregate schneller als die vorgeschalteten Aggregate arbeiten, um einen Werkstückstau zuverlässig auszuschließen. Das erste Aggregat, also das langsamste Aggregat, bestimmt den Produktionstakt. Wird hier eine Beschleunigung erzielt, so erhöht sich die Arbeitsgeschwindigkeit der gesamten Produktionslinie.

Die Integrierung des wegabhängigen Preßvorganges in die Wärmebehandlung kann auch als Druckhärtung bezeichnet werden. Zusätzlich zu den schon geschilderten Vorteilen bewirkt die Druckhärtung massefeuchtigkeitsunabhängig eine extreme Maßhaltigkeit der Bremsbeläge, da sie jeglichen Verzug und jegliche Abmaßänderung während der Wärmebehandlung ausschließt.

Es hat sich als vorteilhaft erwiesen, die Trägerplatte mit dem Reibbelag bei einer Temperatur von 100 bis 300 °C und einem Druck von 20 bis 300 daN/cm² für 120 bis 3600 s dem wegabhängigen Preßvorgang zu unterwerfen; besonders günstige Ergebnisse werden bei einer Temperatur von 230 °C und einem Druck von 50 daN/cm² während einer Preßdauer von 600 s erzielt.

Ferner ist es vorteilhaft, die Trägerplatte mit dem Reibbelag bei einer Temperatur von 20 bis 180 °C und einem Druck von 200 bis 3000 daN/cm² für 2 bis 500 s dem druckabhängigen Preßvorgang zu unterwerfen; besonders günstige Ergebnisse werden erzielt bei einer Temperatur von 70°C und einem Druck von 1200 daN/cm² während einer Preßdauer von 5 s.

Die Vorrichtung zum Herstellen eines Bremsbelages, auf die sich die Erfindung ferner richtet, weist eine Dosierpresse und einen der Dosierpresse nachgeschalteten Härteofen auf. Sie ist zur Lösung der gestellten Aufgabe gekennzeichnet durch eine der Dosierpresse nachgeschaltete Kalibrierpresse, die die Dicke des Reibbelags auf ein vorgegebenes Maß einstellt.

Die Kalibrierpresse ist zur Bildung einer Druckhärteeinrichtung in den Härteofen integriert.

Bei der Dosierpresse handelt es sich um ein handelsübliches Aggregat, welches zeit-, druck- und temperaturgeregelt arbeitet. Die Preßparameter, die von der Rezeptur des Reibmaterials sowie von dessen Herstellungsverfahren abhängen, werden sinnvollerweise so gewählt, daß das Reibmaterial bei dem direkt anschließenden wegabhängigen Preßvorgang noch genügend Nachverdichtungsspielraum auf das Zeichnungsfertigungsmaß der Belagdicke hat.

Vorzugsweise wird ein Plattenförderer vorgesehen, der die Dosierpresse mit der Druckhärteeinrichtung verbindet.

An den Härteofen bzw. den Druckhärteofen kann sich eine Scorch-Presse anschließen. Das Scorchen kann nach allen branchenüblichen Methoden, wie Flamm-, IR-, Laser- oder Druckplattenscorchen geschehen. Die Scorch-Parameter werden so gewählt, daß eine Belagdickenänderung ausgeschlossen ist.

Die Erfindung ist insbesondere auf Scheibenbremsbeläge, allerdings auch auf Trommelbremsbeläge anwendbar.

Die Erfindung wird im folgenden anhand von bevorzugten Ausführungsbeispielen im Zusammenhang mit der beiliegenden Zeichnung näher erläutert. Die Zeichnung zeigt in:
Figur 1 ein schematisches Fließschema des Verfahrensablaufs;
Figur 2 eine schematische Darstellung der Kalibrierpresse in Zuordnung zum Härteofen;
Figur 3 eine gegenüber Figur 2 abgewandelte Ausführungsform.

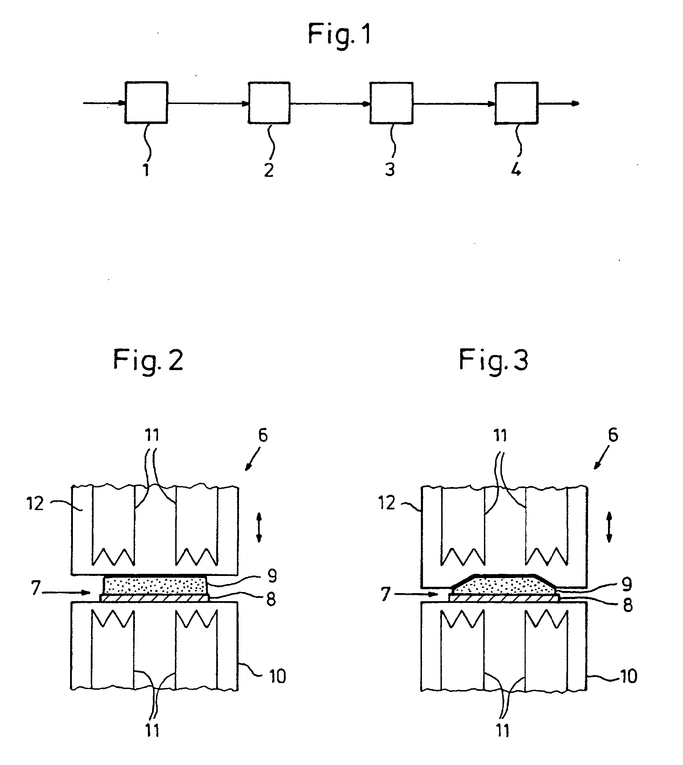

Nach Figur 1 ist eine Dosierpresse 1 vorgesehen, in der auf die Trägerplatten der Bremsbeläge eine bestimmte Menge an Reibmaterial aufdosiert und gleichzeitig aufgepreßt wird. Da das zugeführte Reibmaterial in seiner Dichte ungleichmäßig ist, bewirkt die Dosierpresse eine Vergleichmäßigung der Dichte, wobei sich allerdings erhebliche Dickenunterschiede ergeben. Im übrigen wird der Reibbelag in der Dosierpresse soweit verfestigt, daß eine problemlose Weiterbehandlung möglich ist.

Aus der Dosierpresse 1 gelangen die Bremsbeläge in eine Kalibrierpresse 2, in der die Dicke der Reibbeläge auf einen vorgegebenen Wert eingestellt wird. Dabei kann es zu geringfügigen seitlichen Auswölbungen der Reibbeläge kommen, die aber ohne weiteres tolerierbar sind.

An die Kalibierpresse 2 schließt sich ein Härteofen 3 an, in welchem die Bremsbeläge einer Wärmebehandlung unterworfen werden.

Die letzte Station der Linie wird von einer Scorch-Presse 4 gebildet, in der die Außenschicht des Reibbelages carbonisiert und damit einsatzbereit gemacht wird, ohne daß es zu Abmaßänderungen kommt.

Figur 2 zeigt eine Druckhärteeinrichtung 6, die die Funktionen einer Kalibrierpresse und eines Härteofens miteinander vereint. Ein Scheibenbremsbelag 7, bestehend aus einer Trägerplatte 8 und einer Schicht 9 aus Reibmaterial, ruht auf einem unteren Stempel 10, der mit einer Heizung 11 versehen ist. Ein oberer Stempel 12, ebenfalls versehen mit einer Heizung 11, ist bezüglich des unteren Stempels 10 anhebbar und absenkbar. Der Stempel 12 arbeitet wegkonstant. Hierunter ist zu verstehen, daß sich der Stempel 12 immer bis zum Erreichen einer bestimmten Höhe relativ zum unteren Stempel 10 absenkt und dabei die Schicht 9 aus Reibmaterial komprimiert. Die Dicke des Bremsbelages wird also in sehr exakter Maßhaltigkeit eingestellt, und zwar unter Wärmezufuhr und damit unter gleichzeitiger Aushärtung des Reibmaterials.

Die Ausführungsform der Druckhärteeinrichtung nach Figur 3 unterscheidet sich von der nach Figur 2 lediglich dadurch, daß die Preßfläche des oberen Stempels 12 konturiert ist, um die Bremsbeläge mit Anschrägungen zu versehen.

Die Schicht 9 aus Reibmaterial wird in der Dosierpresse auf die Trägerplatte aufdosiert und einem druckabhängigen Preßvorgang unterworfen. Der druckabhängige Preßvorgang ist außerdem zeit- und temperaturgesteuert. Er dauert fünf Sekunden bei einer Temperatur von 70 °C und einem Druck von 1200 daN/cm².

Um ein Zeichnungsmaß von 18,5 + 0,5 mm Dicke zu erzielen, wird soviel Reibmaterial aufdosiert, daß sich nach dem druckabhängigen Preßvorgang eine Dicke von 18,7 bis 19,0 mm ergibt.

Die Komprimierung auf das gewünschte Zeichnungsmaß erfolgt dann in der anschließenden Druckhärteeinrichtung 6. Der dort stattfindende wegabhängige Preßvorgang dauert 600 s, und zwar bei einer Temperatur von 230 °C und einem Druck von 50 daN/cm².

Bei der Dosierpresse handelt es sich vorzugsweise um eine Rundtischpresse, wobei zwischen der Trägerplatte und dem Reibmaterial noch eine Underlayer aufgebracht werden kann.

Die Druckhärteeinrichtung 6 läßt sich ohne weiteres modulartig erweitern, um die Kapazität der Fertigungsstraße zu erhöhen.

Im Rahmen der Erfindung sind durchaus Abwandlungsmöglichkeiten gegeben. So kann auf die Scorch-Behandlung wie auch auf das Abschleifen der Preßhaut verzichtet werden. Ferner kann die Druckhärteeinrichtung anders als in den Figuren 2 und 3 dargestellt aufgebaut sein. Für den Transport der Bremsbeläge von der Dosierpresse bis durch den Härteofen hindurch bzw. die Druckhärteeinrichtung hindurch kommen beliebige Fördermittel in Frage. Bevorzugt verwendet man allerdings einen Plattenförderer, der dem Druck in der Kalibrierpresse bzw. in der Druckhärteeinrichtung standhält.

## Patentansprüche

1. Verfahren zum Herstellen eines Bremsbelags (7) wobei Reibmaterial (9) auf eine Trägerplatte (8) aufdosiert und druckabhängig auf die Trägerplatte (8) aufgepreßt wird und wobei das auf die Trägerplatte (8) aufgepreßte Reibmaterial (9) sodann unter Wärmezufuhr ausgehärtet sowie während des Aushärtens einem wegabhängigen Preßvorgang unterworfen wird.

2. Verfahren nach Anspruch 1, **dadurch gekennzeichnet, daß** die Trägerplatte (8) mit dem Reibbelag bei einer Temperatur von 100 bis 300 °C und einem Druck vom 20 bis 300 daN/cm² für 120 bis 3600 s dem wegabhängigen Preßvorgang unterworfen wird.

3. Verfahren nach Anspruch 2, **dadurch gekennzeichnet, daß** die Trägerplatte (8) mit dem Reibbelag bei einer Temperatur von 230 °C und einem Druck von 50 daN/cm² für 600 s dem wegabhängigen Preßvorgang unterworfen wird.

4. Verfahren nach Anspruch 2 oder 3 **dadurch gekennzeichnet, daß** die Trägerplatte (8) mit dem Reibbelag bei einer Temperatur von 20 bis 180 °C und einem Druck von 200 bis 3000 daN/cm² für 2 bis 500 s dem druckabhängigen Preßvorgang unterworfen wird.

5. Verfahren nach Anspruch 4, **dadurch gekennzeichnet, daß** die Trägerplatte (8) mit dem Reibbelag bei einer Temperatur von 70 °C und einem Druck von 1200 daN/cm² für 5 s dem druckabhängigen Preßvorgang unterworfen wird.

6. Vorrichtung zum Herstellen eines Bremsbelags (7) mit einer Dosierpresse (1) und einem der Dosierpresse nachgeschalteten Härteofen (3), in den zur Bildung einer Druckhärteeinrichtung eine Kalibrierpresse (2) integriert ist.

7. Vorrichtung nach Anspruch 6, **gekennzeichnet durch** einen die Dosierpresse (1) mit der Druckhärteeinrichtung verbindenden Plattenförderer.

## Claims

1. Method of producing a brake lining (7) in which friction material (9) is metered onto a support plate (8) and is pressed in a pressure-dependent manner onto the support plate (8) and in which the friction material (9) pressed onto the support plate (8) is then hardened with heat supplied and is also subjected during the hardening to a displacement-dependent pressing operation.

2. Method as claimed in Claim 1, **characterised in that** the support plate (8) with the friction lining is subjected to the displacement-dependent pressing operation at a temperature of 100 to 300 °C and a pressure of 20 to 300 daN/cm² for 120 to 3600 s.

3. Method as claimed in Claim 2, **characterised in that** the support plate (8) with the friction lining is subjected to the displacement-dependent pressing operation at a temperature of 230 °C and a pressure of 50 daN/cm² for 600 s.

4. Method as claimed in Claim 2 or 3, **characterised in that** the support plate (8) with the friction lining is subjected to the pressure-dependent pressing operation at a temperature of 20 to 180 °C and a pressure of 200 to 3000 daN/cm² for 2 to 500 s.

5. Method as claimed in Claim 4, **characterised in that** the support plate (8) with the friction lining is subjected to the pressure-dependent pressing operation at a temperature of 70 °C and a pressure of 1200 daN/cm² for 5 s.

6. Apparatus for producing a brake lining (7) with a metering press (1) and a hardening furnace (3) which is disposed downstream of the metering press and into which a calibration press (2) is integrated in order to form a pressure hardening device.

7. Apparatus as claimed in Claim 6, **characterised by** a plate conveyor which connects the metering press (1) to the pressure hardening device.

## Revendications

1. Procédé pour la production d'une garniture de frein (7), dans lequel un matériau de friction (9) est dosé sur une plaque support (8) et est pressé sur la plaque support (8) de manière dépendant de la pression et dans lequel le matériau de friction (9) pressé sur la plaque support (8) est ensuite durci par apport de chaleur et est soumis au cours du durcissement à une opération de pressage dépendant de la course.

2. Procédé selon la revendication 1, **caractérisé en ce que** la plaque support (8) avec la garniture de frein est soumise à l'opération de pressage dépendant de la course à une température de 100 à 300°C et à une pression de 20 à 300 daN/cm² pendant 120 à 3600 s.

3. Procédé selon la revendication 2, **caractérisé en ce que** la plaque support (8) avec la garniture de frein est soumise à l'opération de pressage dépendant de la course à une température de 230°C et à une pression de 50 daN/cm² pendant 600 s.

4. Procédé selon la revendication 2 ou 3, **caractérisé en ce que** la plaque support (8) avec la garniture de frein est soumise à l'opération de pressage dépendant de la pression à une température de 20 à 180°C et à une pression de 200 à 3000 daN/cm² pendant 2 à 500 s.

5. Procédé selon la revendication 4, **caractérisé en ce que** la plaque support (8) avec la garniture de frein est soumise à l'opération de pressage dépendant de la pression à une température de 70°C et à une pression de 1200 daN/cm² pendant 5 s.

6. Dispositif pour la production d'une garniture de frein (7) avec une presse de dosage (1) et un four de durcissement (3) monté en aval de la presse de dosage, dans lequel on intègre une presse de calibrage (2) pour former un dispositif de durcissement à la pression.

7. Dispositif selon la revendication 6, **caractérisé par** un convoyeur à plaques reliant la presse de dosage (1) au dispositif de durcissement à la pression.
